# EUROPÄISCHE PATENTANMELDUNG

(11) **EP 3 822 514 A1**
(43) Veröffentlichungstag der Anmeldung: **19.05.2021**
(21) Anmeldenummer: 20205098.5
(22) Anmeldetag: 02.11.2020
(51) Int. Cl.: F16H 25/20, F16K 31/04, F16H 37/08, F16H 37/06, F16K 31/50

(54) **ANTRIEBSEINHEIT FÜR EIN VENTIL UND VENTIL**

(30) Priorität: 15.11.2019 DE 102019130974
(71) Anmelder: GEMÜ Gebr. Müller Apparatebau GmbH & Co. Kommanditgesellschaft, 74653 Ingelfingen (DE)
(72) Erfinder: Müller, Fritz, 74653 Ingelfingen (DE); Mayer, Jürgen, 74523 Schwäbisch Hall (DE); Oettinger, Nicole, 74653 Künzelsau (DE); Mayer, Peter, 74523 Schwäbisch Hall (DE)
(74) Vertreter: DREISS Patentanwälte PartG mbB

(57) **Zusammenfassung**

Es wird eine Antriebseinheit (100) für ein Ventil zum Stellen eines Prozessfluids bereitgestellt, wobei die Antriebseinheit (100) umfasst: eine Ventilstange (102), welche entlang einer Stellachse (104) bewegbar ist; ein selbsthemmendes Übertragungsgetriebe (106) zum Einleiten eines Stellmoments in die Ventilstange (102); und eine Mehrzahl von Elektromotoren (110, 112), welche derart mit dem selbsthemmenden Übertragungsgetriebe (106) gekoppelt sind, dass eine Momenteinleitung in das Übertragungsgetriebe (106) symmetrisch zur Stellachse (104) erfolgt.

## Beschreibung

Die Erfindung betrifft eine Antriebseinheit für ein Ventil sowie ein Ventil.

Antriebseinheiten für Ventile mit einem Elektromotor sind bekannt. Hierbei kommen insbesondere teure Schrittmotoren oder Hohlwellenmotoren zum Einsatz.

Das der Erfindung zugrundeliegende Problem wird durch eine Antriebseinheit gemäß dem Anspruch 1 sowie ein Ventil gemäß einem nebengeordneten Anspruch gelöst. Vorteilhafte Weiterbildungen finden sich in den Unteransprüchen sowie in der nachfolgenden Beschreibung von Ausführungsbeispielen und der Zeichnung.
Ein erster Aspekt dieser Beschreibung betrifft eine Antriebseinheit für ein Ventil, welches zum Stellen eines Prozessfluids ausgebildet ist. Die Antriebseinheit umfasst: eine Ventilstange, welche entlang einer Stellachse bewegbar ist; ein selbsthemmendes Übertragungsgetriebe zum Einleiten eines Stellmoments in die Ventilstange; und eine Mehrzahl von Elektromotoren, welche derart mit dem selbsthemmenden Übertragungsgetriebe gekoppelt sind, dass eine Momenteinleitung in das Übertragungsgetriebe symmetrisch zur Stellachse erfolgt.

Vorteilhaft lässt sich hiermit ein kompakter und preisgünstiger Stellantrieb für Prozessventile bereitstellen. Im Vergleich zu einem einzigen Elektromotor vergleichbarer Stärke lässt sich der Bauraum mittels der Mehrzahl von Elektromotoren reduzieren.

Darüber hinaus wird durch das selbsthemmende Getriebe eine energieeffiziente Antriebseinheit bereitgestellt, die bei einer erreichten Zielposition verweilt, ohne dass hierfür Energie bereitgestellt werden muss.

Durch das Vorsehen einer Anzahl von Elektromotoren und die Symmetrie der Momenteinleitung werden die Spannungen insbesondere innerhalb des selbsthemmenden Getriebes reduziert. Die reduzierte Belastung geht mit einer Erhöhung der durchführbaren Schaltzyklen einher. Die Lebensdauer der Antriebseinheit wird verlängert.

Ein vorteilhaftes Beispiel zeichnet sich dadurch aus, dass Rotorachsen der Mehrzahl von Elektromotoren äquidistant zur Stellachse und äquidistant zueinander sind, und wobei die Rotorachsen parallel zur Stellachse verlaufen.

Vorteilhaft lässt sich im Aufnahmeraum für die Elektromotoren Platz sparen. Darüber hinaus wird das Übertragungsgetriebe durch die homogenere Krafteinleitung von Spannungen entlastet.

Ein vorteilhaftes Beispiel zeichnet sich dadurch aus, dass eine Spindelmutter des Übertragungsgetriebes einen Zahnkranz umfasst, und dass ein jeweiliges Zahnrad, welches an einem jeweiligen Rotor der Elektromotoren angeordnet ist, in den Zahnkranz eingreift.

Vorteilhaft wird ein einfaches und wartungsarmes Übertragungsgetriebe bereitgestellt. Die Einleitung des von den Motoren in die Spindelmutter eingeleiteten Moments geschieht homogener. Insbesondere Spannungen verteilen sich in Umfangsrichtung des Zahnkranzes der Spindelmutter.

Ein vorteilhaftes Beispiel zeichnet sich dadurch aus, dass zwei Wälzlager die Spindelmutter zu einer Rotation um die Stellachse festlegen, und wobei ein Verbindungsabschnitt, welcher ein Innengewinde und den Zahnkranz der Spindelmutter miteinander verbindet, zwischen den beiden Wälzlagern angeordnet ist.

Vorteilhaft wird die Spindelmutter von zwei Wälzlagern eingefasst, was die Lagerung der Spindelmutter und den Eingriff mit der Ventilstange verbessert. Des Weiteren ist die Lagerung kompakt ausgeführt.

Ein vorteilhaftes Beispiel zeichnet sich dadurch aus, dass die Mehrzahl der Elektromotoren mit einem gemeinsamen Halteelement verbunden sind, dass ein Abschnitt eines Rotors des jeweiligen der Mehrzahl von Elektromotoren durch eine zugeordnete Öffnung des Halteelements geführt ist, und dass der jeweilige Abschnitt des Rotors den zugeordneten Elektromotor und das Übertragungsgetriebe zu einer Kraftübertragung miteinander verbindet.

Vorteilhaft vereinfacht das gemeinsame Haltelement die Montage der Antriebseinheit.

Ein vorteilhaftes Beispiel zeichnet sich dadurch aus, dass das gemeinsame Halteelement und ein ventilkörper-seitiger Abschnitt der Antriebseinheit einen radial äußeren Abschnitt eines jeweiligen bzw. des jeweiligen Wälzlagers festlegen.

Vorteilhaft wird durch die beidseitige Festlegung der Wälzlager die Lagerung der Spindelmutter verbessert.

Ein vorteilhaftes Beispiel zeichnet sich dadurch aus, dass die Antriebseinheit einen Anschlussbereich zum Anschließen an einen Ventilkörper oder ein Zwischenstück umfasst, und wobei das selbsthemmende Getriebe zwischen der Mehrzahl der Elektromotoren und dem Anschlussbereich angeordnet ist.

Vorteilhaft reduziert diese Anordnung die Größe der Antriebseinheit in einer Lotebene der Stellachse. So können die Elektromotoren näher beieinander angeordnet werden und der Bauraum in Richtung Ventilkörper bzw. Zwischenstück wird besser genutzt. Insbesondere lassen sich so schmal bauende Antriebseinheiten herstellen.

Ein vorteilhaftes Beispiel zeichnet sich dadurch aus, dass die Antriebseinheit eine Anzahl von zwei Elektromotoren aufweist.

Vorteilhaft wird mit der Anzahl von zwei Elektromotoren, die über das Übertragungsgetriebe mit der Ventilstange gekoppelt sind, ein guter Kompromiss zwischen Kosten und Kompaktheit erreicht. Bei komplexen Ventilblöcken ist es von Vorteil, wenn die Antriebseinheit möglichst schmal baut. Die zweimotorige Antriebseinheit ist also vor allem zum Einsatz an komplexen Ventilblöcken geeignet.

Ein zweiter Aspekt dieser Beschreibung betrifft ein Ventil, insbesondere ein Membranventil oder Sitzventil, umfassend die Antriebeinheit gemäß dem ersten Aspekt.

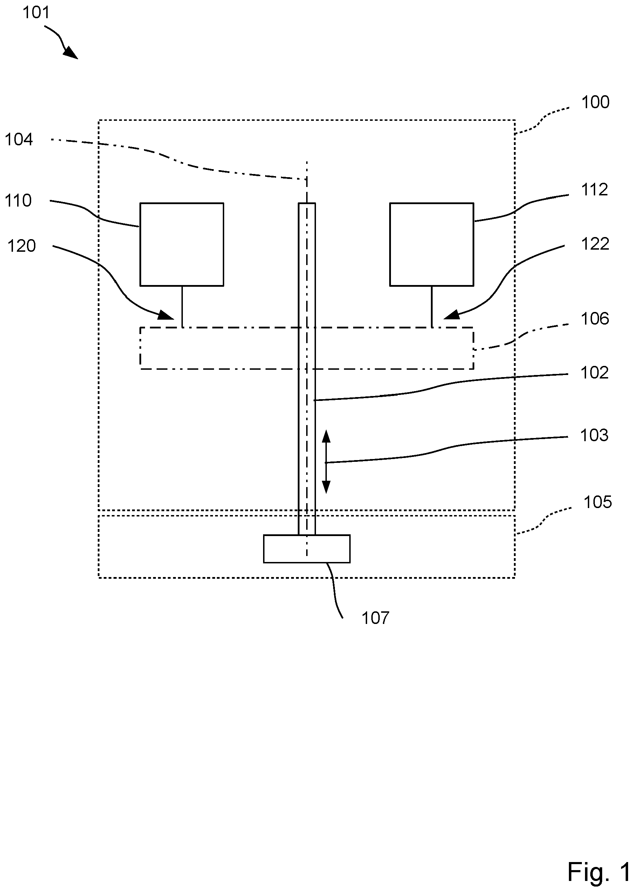

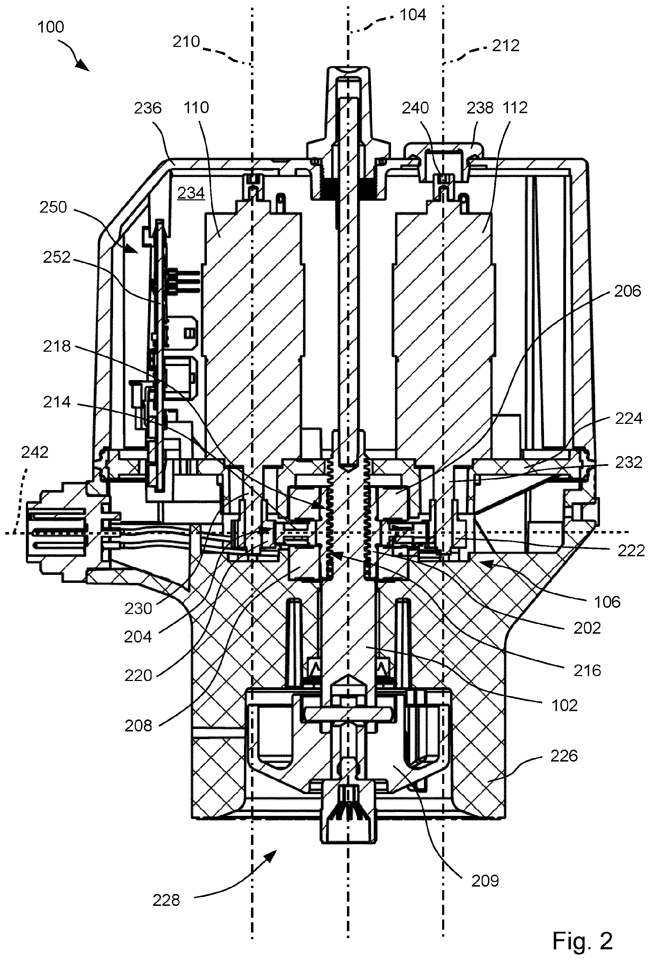

In der Zeichnung zeigen die Figuren 1 und 2 jeweils einen schematischen Schnitt einer Antriebseinheit.

Figur 1 zeigt einen schematischen Schnitt einer Antriebseinheit 100 für ein Ventil 101 zum Stellen eines Prozessfluids. Eine Ventilstange 102 ist entlang einer Stellachse 104 gemäß dem Doppelpfeil 103 bewegbar. Die Ventilstange 102 ist mit einem in einem Ventilkörper 105 angeordneten Stellmittel 107 beispielsweise mit einem Druckstück und/oder einer Membran verbunden. Das Stellmittel 107 wirkt mit einem nicht gezeigten Ventilsitz derart zusammen, dass der Fluss des Prozessfluids begrenzt wird.

Ein selbsthemmendes Übertragungsgetriebe 106 ist zum Einleiten eines Stellmoments in die Ventilstange 102 ausgebildet. Das eingeleitete Stellmoment sorgt dafür, dass die Ventilstange 102 eine gewünschte Position einnimmt.

Eine Mehrzahl von Elektromotoren 110, 112 sind derart mit dem selbsthemmenden Übertragungsgetriebe 106 gekoppelt, dass eine Momenteinleitung in das Übertragungsgetriebe 106 symmetrisch zur Stellachse 104 erfolgt. Krafteinleitungsbereiche 120 und 122, in denen die Kraft von dem jeweiligen Rotor des Elektromotors 110, 112 in das Übertragungsgetriebe 106 eingeleitet wird, liegen beispielsweise in einer gemeinsamen Lotebene der Stellachse 104. Die Elektromotoren 110, 112 sind Bürstenmotoren.

Figur 2 zeigt einen schematischen Schnitt der Antriebseinheit 100. Die Antriebseinheit 100 umfasst einen Anschlussbereich 228 zum Anschließen an den Ventilkörper oder ein Zwischenstück. Das selbsthemmende Getriebe 106 ist zwischen der Mehrzahl der Elektromotoren 110, 112 und dem Anschlussbereich 228 angeordnet. In Richtung des Ventilkörpers ist das Druckstück 209 mit der Ventilstange 102 verbunden.

Rotorachsen 210, 212 der Mehrzahl von Elektromotoren 110, 112 sind äquidistant zur Stellachse 104 und äquidistant zueinander angeordnet. Die Rotorachsen 210, 212 verlaufen parallel zur Stellachse 104. Die Kraft- bzw. Momenteinleitung ausgehend von den Elektromotoren 110, 112 in das Übertragungsgetriebe 106 erfolgt also symmetrisch zur Stellachse 104. Vorliegend wirken zwei Elektromotoren 110, 112 mit dem Übertragungsgetriebe zusammen. Selbstverständlich können auch drei, vier oder mehr Elektromotoren vorgesehen sein. Die Mehrzahl der Elektromotoren 110, 112 sind baugleich, wodurch sich der Aufbau vereinfacht und die Kosten reduziert werden.

Die Elektromotoren 110, 112 sind in einem Aufnahmeraum 234 untergebracht, welcher abschnittsweise von eine Abdeckung 236 umgeben wird. Eine Öffnung in der Abdeckung 236 ist mit einem entfernbaren Stopfen 238 verschlossen. Bei entferntem Stopfen 238 ist eine Eingriffskontur 240, welche mit dem Rotor 232 des Elektromotors 112 drehfest verbunden ist, erreichbar. Mittels eines passenden Werkzeugs, welches in die Eingriffskontur 240 eingreift, ist der Rotor des Elektromotors 112 manuell verdrehbar. So ist ein manuelles Öffnen und Schließen des Ventils möglich.

Eine Steuereinheit 250 ist mittels elektronischer Bauelemente auf einer Leiterplatte 252 realisiert. Die Steuereinheit 250 steuert die Elektromotoren 110, 112 derart mit Gleichstrom an, dass diese gleichzeitig ein im Wesentlichen gleiches Moment in das Übertragungsgetriebe 106 einbringen. Die Steuereinheit 250 realisiert eine Überstromabschaltung. Fährt die Ventilstange 102 auf Block, d. h. trifft diese auf den Ventilsitz oder in die entgegensetzte Richtung auf einen vorgesehenen Blockbereich, dann erhöht sich der den Elektromotoren zugeführte Strom bis zu einer vorbestimmten Grenze, bei der die Abschaltung erfolgt. So können beispielsweise Positionsschalter vorteilhaft entfallen.

Des Weiteren ist jedem der Mehrzahl von Elektromotoren 110, 112 ein nicht sichtbares Fail-Safe-Modul zugeordnet, dessen Kondensatoren im Falle eines Stromausfalls genügend Energie liefern um das Ventil in den gewünschten geschlossenen oder geöffneten Zustand zu überführen.

Eine Spindelmutter 202 des Übertragungsgetriebes 106 umfasst einen äußeren Zahnkranz 204. Ein jeweiliges Zahnrad 220, 222 ist an dem jeweiligen Rotor 230, 232 der Elektromotoren 110, 112 angeordnet. Die Zahnräder 220, 222 greifen lateral in den Zahnkranz 204 der Spindelmutter 202 zur Kraftübertragung ein. Die Zahnräder 220, 222 und der Zahnkranz 204 bewegen sich in einer Lotebene 242 der Stellachse 104. Des Weiteren ist das Übertragungsgetriebe 106 symmetrisch zur Lotebene 242 ausgebildet.

Zwei Wälzlager 206, 208 legen die Spindelmutter 202 zu einer Rotation um die Stellachse 104 fest. Die Wälzlager 206, 208 sind radial nach innen auf einen jeweiligen distalen Zylinderaußenmantel der Spindelmutter 202 aufgebracht. Das jeweilige Wälzlager 206, 208 wird beispielsweise radial in einer Spielpassung von Hand gefügt.

Ein Verbindungsabschnitt 214, welcher ein Innengewinde 216 und den Zahnkranz 204 der Spindelmutter 202 miteinander verbindet, ist zwischen den beiden Wälzlagern 206, 208 angeordnet. Die Spindelmutter 202, welche mit ihrem Innengewinde 216 in ein Außengewinde 218 der Ventilstange 102 eingreift, umfasst den äußeren Zahnkranz 204. Das jeweilige, lateral zur Spindelmutter 202 angeordnete Zahnrad 220, 222 ist mit dem jeweiligen Rotor 230, 232 der Elektromotoren 110, 112 verbunden und greift in den äußeren Zahnkranz 204 ein.

Die Mehrzahl der Elektromotoren 110, 112 sind mit einem gemeinsamen Halteelement 224 beispielsweise einer Halteplatte verbunden. Ein Abschnitt eines Rotors 230, 232 des jeweiligen der Mehrzahl von Elektromotoren 110, 112 ist durch eine zugeordnete Öffnung des Halteelements 224 geführt. Der jeweilige Abschnitt des Rotors 230, 232 verbindet den zugeordneten Elektromotor 110, 112 und das Übertragungsgetriebe 106 zu einer Kraftübertragung miteinander. Das Übertragungsgetriebe 106 umfasst also einen motorseitigen Stirnradgetriebeabschnitt und einen ventilstangenseitigen Schraubgetriebeabschnitt. Vorteilhaft wird die über den Stirnradgetriebeabschnitt eingebrachte Rotationsbewegung über den Schraubgetriebeabschnitt in eine translatorische Bewegung der Ventilstange 102 umgewandelt.

Das gemeinsame Halteelement 224 und ein ventilkörper-seitiger Abschnitt 226 der Antriebseinheit 100 legen einen radial äußeren Abschnitt eines jeweiligen bzw. des jeweiligen Wälzlagers 206, 208, welches beispielsweise radial in einer Spielpassung von Hand gefügt ist, in einer hierfür vorgesehenen jeweiligen Ausnehmung fest.

## Patentansprüche

1. Eine Antriebseinheit (100) für ein Ventil zum Stellen eines Prozessfluids, wobei die Antriebseinheit (100) umfasst:
eine Ventilstange (102), welche entlang einer Stellachse (104) bewegbar ist;
ein selbsthemmendes Übertragungsgetriebe (106) zum Einleiten eines Stellmoments in die Ventilstange (102); und
eine Mehrzahl von Elektromotoren (110, 112), welche derart mit dem selbsthemmenden Übertragungsgetriebe (106) gekoppelt sind, dass eine Momenteinleitung in das Übertragungsgetriebe (106) symmetrisch zur Stellachse (104) erfolgt.

2. Die Antriebseinheit (100) gemäß dem Anspruch 1, wobei Rotorachsen (210, 212) der Mehrzahl von Elektromotoren (110, 112) äquidistant zur Stellachse (104) und äquidistant zueinander sind, und wobei die Rotorachsen (210, 212) parallel zur Stellachse (104) verlaufen.

3. Die Antriebseinheit (100) gemäß einem der vorigen Ansprüche, wobei eine Spindelmutter (202) des Übertragungsgetriebes (106) einen Zahnkranz (204) umfasst, und wobei ein jeweiliges Zahnrad (220, 222), welches an einem jeweiligen Rotor (230, 232) der Elektromotoren (110, 112) angeordnet ist, in den Zahnkranz (204) eingreift.

4. Die Antriebseinheit (100) gemäß dem Anspruch 3, wobei zwei Wälzlager (206, 208) die Spindelmutter (202) zu einer Rotation um die Stellachse (104) festlegen, und wobei ein Verbindungsabschnitt (214), welcher ein Innengewinde (216) und den Zahnkranz (204) der Spindelmutter (202) miteinander verbindet, zwischen den beiden Wälzlagern (206, 208) angeordnet ist.

5. Die Antriebseinheit (100) gemäß einem der vorigen Ansprüche, wobei die Mehrzahl der Elektromotoren (110, 112) mit einem gemeinsamen Halteelement (224) verbunden sind, wobei ein Abschnitt eines Rotors (230, 232) des jeweiligen der Mehrzahl von Elektromotoren (110, 112) durch eine zugeordnete Öffnung des Halteelements (224) geführt ist, und wobei der jeweilige Abschnitt des Rotors (230, 232) den zugeordneten Elektromotor (110, 112) und das Übertragungsgetriebe (106) zu einer Kraftübertragung miteinander verbindet.

6. Die Antriebseinheit (100) gemäß dem Anspruch 5, wobei das gemeinsame Halteelement (224) und ein ventilkörper-seitiger Abschnitt (226) der Antriebseinheit (100) einen radial äußeren Abschnitt eines jeweiligen bzw. des jeweiligen Wälzlagers (206, 208) festlegen.

7. Die Antriebseinheit (100) gemäß einem der vorigen Ansprüche, wobei die Antriebseinheit (100) einen Anschlussbereich (228) zum Anschließen an einen Ventilkörper oder ein Zwischenstück umfasst, und wobei das selbsthemmende Getriebe (106) zwischen der Mehrzahl der Elektromotoren (110, 112) und dem Anschlussbereich (228) angeordnet ist.

8. Die Antriebseinheit (100) gemäß einem der vorigen Ansprüche, wobei die Antriebseinheit (100) eine Anzahl von zwei Elektromotoren (110, 112) aufweist.

9. Ein Ventil, insbesondere ein Membranventil oder Sitzventil, umfassend die Antriebeinheit (100) gemäß einem der vorigen Ansprüche.
